# EUROPEAN PATENT SPECIFICATION

(11) **EP 4 371 678 B1**
(45) Date of publication and mention of the grant of the patent: **02.09.2026**
(21) Application number: 22842055.0
(22) Date of filing: 08.07.2022
(51) Int. Cl.: C22B 15/00, B09B 5/00, B32B 7/06, B32B 15/01, B32B 15/20, B32B 43/00, B09B 101/17

(54) **METHOD FOR SEPARATING COPPER-COPPER LAMINATE**
VERFAHREN ZUR TRENNUNG EINES KUPFER-KUPFER-LAMINATS
PROCÉDÉ DE SÉPARATION D'UN STRATIFIÉ CUIVRE-CUIVRE

(30) Priority: 13.07.2021 JP 2021115527
(43) Date of publication of application: 22.05.2024
(73) Proprietor: National Institute for Materials Science, Tsukuba-shi, Ibaraki 305-0047 (JP)
(72) Inventor: SHIGETOU, Akitsu, Tsukuba-shi, Ibaraki 305-0047 (JP)
(74) Representative: J A Kemp LLP
(86) International application number: PCT/JP2022/027099
(87) International publication number: WO 2023/286711

(56) References cited:
- WO-A1-2016/116980
- CN-A- 101 092 663
- JP-A- 2015 051 542
- JP-A- 2015 051 542
- JP-A- H0 885 830
- SHIGETOU AKITSU ET AL: "VUV-assisted low temperature bonding for organic/inorganic hybrid integration at atmospheric pressure", 2013 3RD IEEE CPMT SYMPOSIUM JAPAN, IEEE, 11 November 2013 (2013-11-11), pages 1 - 4, XP032574501, ISBN: 978-1-4799-2718-0, [retrieved on 20140304], DOI: 10.1109/ICSJ.2013.6756119
- AKITSU SHIGETOU ET AL: "Hybrid bonding of organic/inorganic substrates in ambient air for eco-friendly 3D integration of microelectronics", ELECTRONICS GOES GREEN 2012+ (EGG), 2012, IEEE, 9 September 2012 (2012-09-09), pages 1 - 6, XP032272383, ISBN: 978-1-4673-4512-5
- SHIGETOU AKITSU ET AL: "Modified Diffusion Bonding of Chemical Mechanical Polishing Cu at 150 ?C at Ambient Pressure", APPLIED PHYSICS EXPRESS, vol. 2, 17 April 2009 (2009-04-17), JP, pages 056501, XP093290657, ISSN: 1882-0778, DOI: 10.1143/APEX.2.056501

## Description

### TECHNICAL FIELD

The present invention relates to a method for separating a copper-copper laminate.

### BACKGROUND ART

An electronic substrate, clad material, or composite structure thereof having a Cu thin film electrode often has a joint interface between Cu and Cu or between copper-copper laminates.

In a laminate including an electronic device, many flexible organic substrates are used for the purpose of reducing the thickness and the weight and achieving biocompatibility, and improvement in recovery efficiency of rare materials contained in the flexible organic substrates and the like is awaited. Therefore, if a method is provided that enables maintenance of a large bonding strength from material compounding (joining) to actual operation and enables solid-phase separation of a different material from an adhesion interface or a joint interface after service life, using such a method directly leads to reduction of a load in a recycle intermediate process.

In such a laminate including an electronic device, for example, when a copper foil as an electrode pattern is attached onto a surface of a flexible organic substrate, a vapor-assisted vacuum ultraviolet irradiation technique (V-VUV) is used.

Details of the vapor-assisted vacuum ultraviolet irradiation technique are disclosed, for example, in Patent Literature 1 and 2. An outline of processes for an inorganic material containing Cu disclosed in these literatures is as follows.
(1) Pure water vapor is contained in an atmospheric pressure nitrogen atmosphere.
(2) A sample is introduced into the atmosphere of (1) and irradiated with vacuum-ultraviolet light. The irradiation with vacuum-ultraviolet light causes removal of contaminants adsorbed onto material surfaces, partial reduction of native oxides, and formation of a cross-linking layer on a cation site.
(3) The surfaces of (2) are brought into contact at normal temperature, and then heated to, for example, about 150°C to promote a dehydration condensation reaction between cross-linking layers, leading to a bond.

The vacuum-ultraviolet light herein is ultraviolet light having a wavelength of 10 to 200 nm. Vacuum-ultraviolet light in a wavelength band of 150 to 200 nm is strongly absorbed by oxygen molecules in the air, but passes through nitrogen. Therefore, this wavelength band can be used in an atmosphere containing no oxygen (generally, pure nitrogen) without using an expensive vacuum chamber. Such a case is exemplified by a 193 nm photolithography apparatus (for manufacture of a semiconductor), a circular dichroism spectrometer, and the like.

The cross-linking layer formed on the Cu surface with the vapor-assisted vacuum ultraviolet irradiation technique is usually amorphous Cu(OH)₂·[H₂O]₂, which is caused by the action of H and OH radical species generated by separation of water through irradiation with vacuum-ultraviolet light. It has been found that the growth in thickness of the cross-linking layer is proportional to the product of the water vapor density and the vacuum ultraviolet irradiation time (defined as the exposure amount (s·kg/m³)) until the reaction to the cation site is saturated. It has been confirmed that a general Cu thin film grows to a thickness of about 15 to 20 nm at 3 to 4 s·kg/m³ and reaches saturation.

Conventionally, the vapor-assisted vacuum ultraviolet irradiation technique has achieved joining at a low temperature under atmospheric pressure with various combinations of materials. Partially because the technological innovation progresses rapidly, structures including an electronic device have a product life as short as several years to ten and several years, which is shorter than the life of a normal structural material. Therefore, after the product life time, a large amount of wastes are generated. However, these wastes contain valuable materials such as gold and rare earth elements at a higher content rate than raw stones in normal mines, and thus are also called urban mines. This fact increases the importance of a recycling technology for recovery of a valuable metal element and/or a rare earth element from a waste of a laminate including an electronic device.

Patent Literature 1 addresses the problem of providing a joining method and a joining device capable of joining materials to each other at low temperature under atmospheric pressure. A joining method is provided which comprises: a cleaning step including an irradiation stage of irradiating the joining face of the first material and the joining face of the second material with ultraviolet rays in a state where the first material and the second material are separated; an exposure step of exposing at least either the joining face of the first material or the joining face of the second material to a cross-linked substance; and an abutting step of abutting the joining face of the first material and the joining face of the second material.

Shigetou et al., "VUV-assisted low temperature bonding for organic/inorganic hybrid integration at atmospheric pressure", 2013 3rd IEEE CPMT Symposium Japan, 11-13 November 2013, is concerned with hybrid bonding among Cu, Ti, quartz, and polydimethylsiloxane substrate, by using vacuum ultraviolet irradiation and vapor-assisted surface modification processes. It is said that this turned out highly feasible at 150°C and atmospheric pressure.

Shigetou et al., "Hybrid bonding of organic/inorganic substrates in ambient air for eco-friendly 3D integration of microelectronics", Electronics Goes Green 2012+, 9-12 September 2012, is concerned with hybrid bonding of Cu, SiO₂, and polyimides, by using a single vapor-assisted method at 150°C and atmospheric pressure. It is said that this was found to be highly feasible and that it would be of practical use in 3D hetero-integration of flat layer structures with reduced process complexity and toxicity.

Shigetou et al., "Modified diffusion bonding of chemical mechanical polishing Cu at 150°C at ambient pressure", Applied Physics Express 2 (2009) 056501, describes the feasibility of a low-temperature bonding process for Cu thin films in ambient air.

### CITATION LIST

### PATENT LITERATURE

PATENT LITERATURE 1: JP-A-2015-051542
PATENT LITERATURE 2: WO 2019/221288 A1

### SUMMARY OF INVENTION

### TECHNICAL PROBLEM

Many of the current resource recycling technologies need high temperature or high energy. In particular, in electronic substrates, the material melting point has been increased along with power increase and heat dissipation in the device. Therefore, it is also conceivable to adopt a resource recycling technology that functions in a high temperature region exceeding the melting point. However, technological innovation in the extension of such conventional method has a problem that a large cost and a long time are required particularly by an organic or inorganic composite material in an intermediate process such as separation and detoxification of its melt.

The laminate including an electronic device is a composite material. Physical peeling methods at an interface between different materials of the composite material are proposed such as a method of introducing a substance having a different thermal expansion coefficient as a peeling layer and a method of applying hydrogen doping to a surface of an adherend in advance to cause thermal foaming. However, both the methods have a problem of lacking simplicity of the process.

### SOLUTION TO PROBLEM

In order to solve the above problems, the present inventor has studied whether it is feasible to apply, to a cross-linking layer, a compound having a normal positive thermal expansion coefficient at room temperature and having a negative thermal expansion coefficient at a low temperature that is a predetermined temperature or less. That is, the present inventor has conceived that if a compound that rapidly expands only in the vicinity of a specific temperature can be used in a cross-linking layer to form a laminate of layered substrates, the obtained laminate can have a simple structure derived from the layered substrates and have a structure separable at the time of disposal of the laminate at a joint portion including the compound, and thus the present invention has been completed. According to the configuration of the laminate, a substance having a different thermal expansion coefficient can be introduced as a peeling layer, and thus physical peeling at an interface can be performed with a simple process.

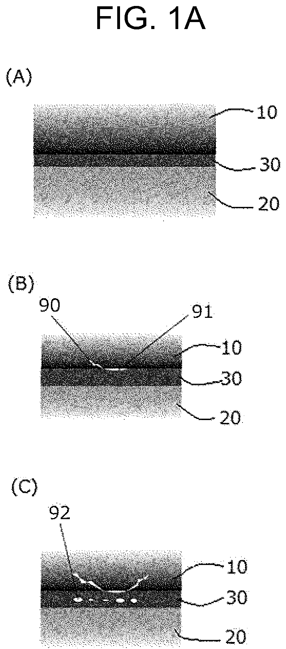

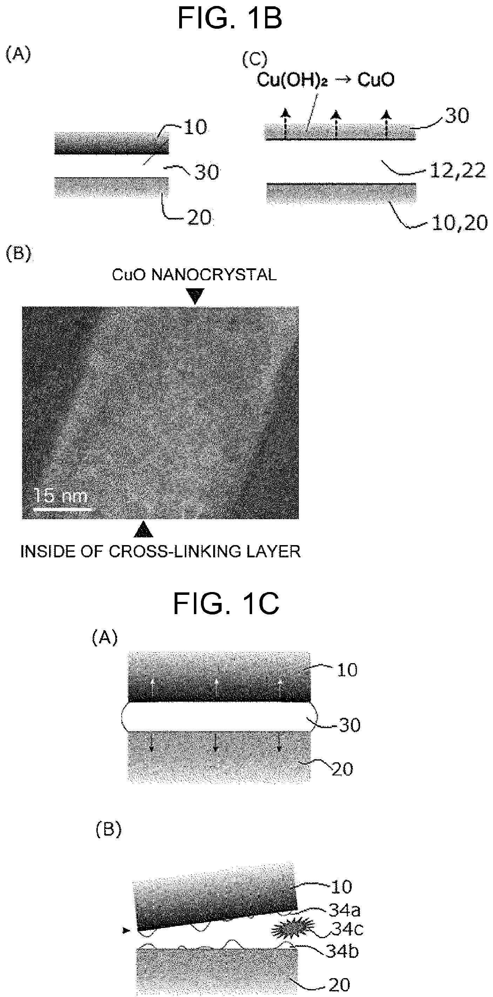

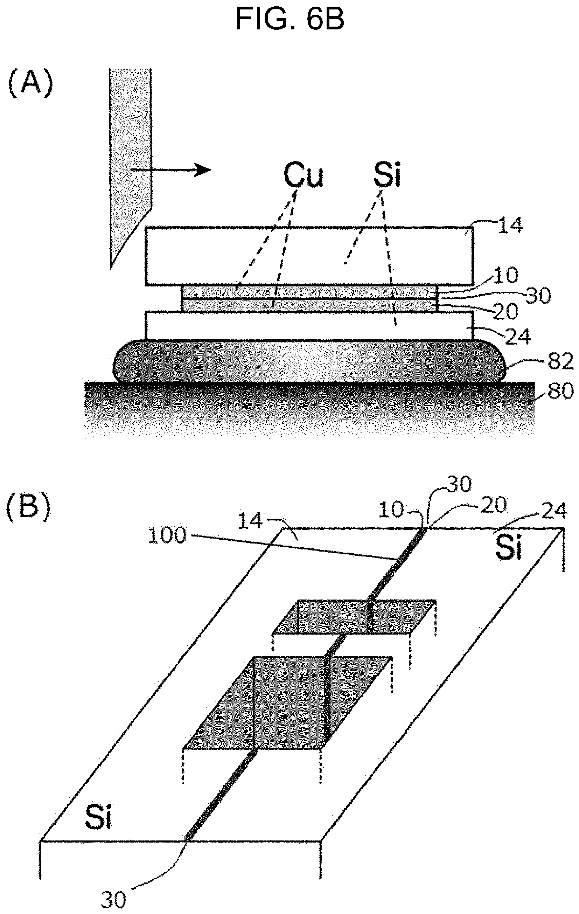

An overview of aspects or embodiments of the present invention is shown below. However, the present invention is not limited to the following.
[1] The method for separating a copper-copper laminate of the present invention is, for example, as illustrated in FIG. 6B(A) and FIG. 1C, a method in which a first structure 14 having a first copper conductor film 10 on a joining surface, a second structure 24 having a second copper conductor film 20 on a joining surface, and a cross-linking layer 30, between the joining surface of the first structure 14 and the joining surface of the second structure 24, including a nanocrystal of copper(II) oxide are formed, the nanocrystal having a crystal grain size of 1 to 20 nm measured with a method using an electron microscope, and the cross-linking layer 30 is cooled to a temperature equal to or less than a magnetic transition temperature of copper(II) oxide, wherein the magnetic transition temperature of copper(II) oxide is -100°C or more and -80°C or less, which is followed by separating the first copper conductor film 10 and the second copper conductor film 20.
[2] In the method for separating a copper-copper laminate of the present invention, preferably, the cross-linking layer may have a thickness of 1 nm or more and 20 nm or less.
[3] In the method for separating a copper-copper laminate of the present invention, preferably, the temperature for cooling the cross-linking layer may be close to to a temperature at which a thermal expansion coefficient of at least the copper(II) oxide is reduced until reaching a negative value. The temperature at which the thermal expansion coefficient of the copper(II) oxide is reduced until reaching a negative value in the present invention varies to some extent compared with that in the case of a perfect single crystal, and thus is in the range of -100°C or more and -90°C or less.
[4] In the method for separating a copper-copper laminate of the present invention, preferably, the nanocrystal of the copper(II) oxide included in the cross-linking layer may be derived from a cross-linked substance generated with a vapor-assisted vacuum ultraviolet irradiation technique.
   Here, the vapor-assisted vacuum ultraviolet irradiation technique refers to a method in which each of the joining surfaces of the first structure and the second structure is irradiated with vacuum-ultraviolet light having a wavelength of 150 nm or more and 200 nm or less in a nitrogen gas atmosphere containing no oxygen under atmospheric pressure while humidifying the atmosphere with water vapor. The joining surfaces of the first structure and the second structure are cleaned by the irradiation with the vacuum-ultraviolet light. Thereafter, the joining surfaces of the first structure and the second structure are pressure-bonded to obtain a copper-copper laminate.
[5] In the method for separating a copper-copper laminate of the present invention, preferably, the cross-linking layer may be generated through:
   an irradiation step of irradiating the first copper conductor film and the second copper conductor film in a state of being separated from each other with vacuum ultraviolet light having a wavelength of 150 nm or more and 200 nm or less in presence of water vapor under a nitrogen gas atmosphere containing no oxygen;
   an exposure step of exposing at least one of the first copper conductor film or the second copper conductor film to a cross-linked substance; and
   a contact step of bringing the first copper conductor film and the second copper conductor film into contact with each other.
[6] In the method for separating a copper-copper laminate of the present invention, preferably, the cross-linked substance may be Cu(OH)₂·[H₂O]₂. In this formula, the number of the [H₂O] molecules is theoretically 2, but indeed, two water molecules are not always attached uniformly, and the average number of the [H₂O] molecules is often smaller than 2 in the entire sample. Therefore, this alternatively may be represented by the formula Cu(OH)₂·[H₂O]₂₋ₓ. The subscript (2-x) in this alternative formula is relatively common in papers and the like as a way of expressing an index of a compound.
[7] The copper-copper laminate comprises, for example, as illustrated in FIG. 6B(A), a first structure 14 having a first copper conductor film 10 on a joining surface, a second structure 24 having a second copper conductor film 20 on a joining surface, and a cross-linking layer 30, between the joining surface of the first structure 14 and the joining surface of the second structure 24, including a nanocrystal of copper(II) oxide.
[8] In the copper-copper laminate, preferably, a crystal grain size of the nanocrystal may be 1 nm or more and 10 nm or less.

### ADVANTAGEOUS EFFECTS OF INVENTION

According to the method for separating a copper-copper laminate of the present invention, solid-phase separation performance can be exhibited by using a phenomenon that inevitably occurs due to a mechanism for achievement of joining with the vapor-assisted vacuum ultraviolet irradiation technique, that is, generation of a metal oxide nanocrystal inside a cross-linking layer after joining. By using cooling to a temperature that can be reached with an industrial freezer, the solid-phase separation performance can be exhibited when a slight shear stress is applied without adding a special procedure to the joining process.

### BRIEF DESCRIPTION OF DRAWINGS

FIG. 1A shows conceptual views of a solid-phase separation method of the present invention by cooling a copper-copper laminate. FIG. 1A(A) is a configuration sectional view of a copper-copper laminate in which a general material having a negative thermal expansion coefficient is sandwiched as a cross-linking layer, FIG. 1A(B) is an explanatory view of a partial fracture of a copper conductor film, and FIG. 1A(C) is an explanatory view of defect propagation in a cross-linking layer.
FIG. 1B shows conceptual views of a solid-phase separation method by formation of a cross-linking layer and cooling with a vapor-assisted vacuum ultraviolet irradiation technique, as an embodiment of the present invention. FIG. 1B(A) is a configuration sectional view of a copper-copper laminate sandwiched between cross-linking layers, FIG. 1B(B) is an electron micrograph of a CuO nanocrystal, and FIG. 1B(C) is an explanatory view of a structure in a cross-linking layer.
FIG. 1C shows explanatory configuration views of a solid-phase separation state of a copper-copper laminate. FIG. 1C(A) is a configuration sectional view in which a copper-copper laminate is joined with a cross-linking layer 30, and FIG. 1C(B) is an explanatory view of solid-phase separation in the cross-linking layer 30 of the copper-copper laminate.

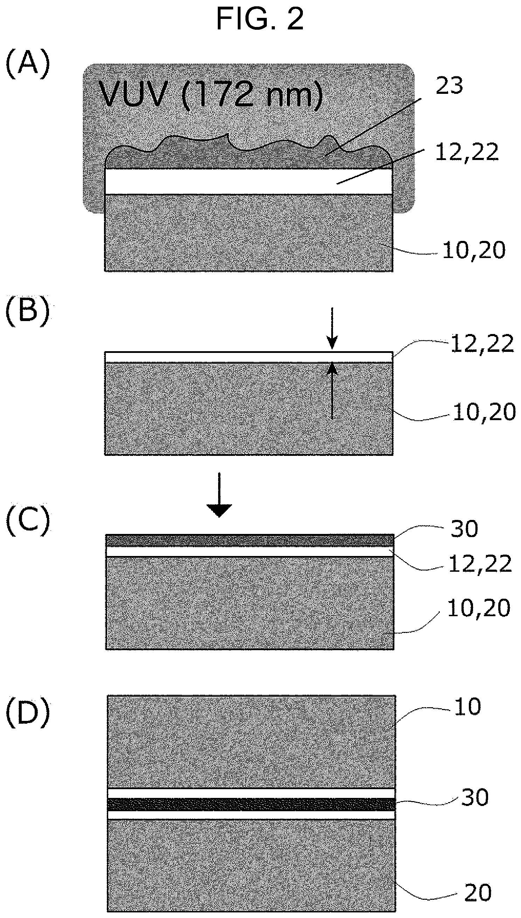

FIG. 2 shows explanatory views of steps of a vapor-assisted vacuum ultraviolet irradiation process. FIG. 2(A) illustrates a step of irradiating a copper conductor film surface with vacuum-ultraviolet light to purify the copper conductor film surface, FIG. 2(B) illustrates a state after purifying the copper conductor film surface, FIG. 2(C) illustrates a step of bringing copper conductor films on structure surfaces close to each other to form a cross-linking layer, and FIG. 2(D) illustrates a step of joining the structure surfaces with the cross-linking layer by contact at room temperature and heating at a low temperature.

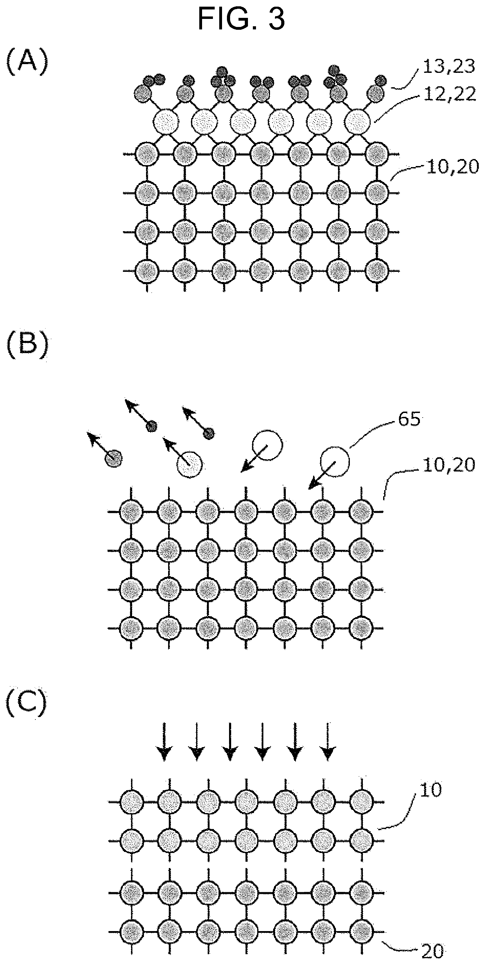

FIG. 3 shows an explanatory view of a step of a surface activation normal temperature joining process as a comparative example, and explanatory views of a copper conductor film surface at an atomic level. FIG. 3(A) illustrates organic contaminants 13 and 23 (adhering contaminants of organic compounds) adsorbed on surfaces of a first copper conductor film 10 and a second copper conductor film 20 in an initial state, and atoms or molecules of native oxide layers 12 and 22. FIG. 3(B) illustrates a cleaning process on a copper conductor film surface with vacuum-ultraviolet light. FIG. 3(C) illustrates joining of copper conductor films in a state of no significant heating, such as heating at a low temperature in vacuum.

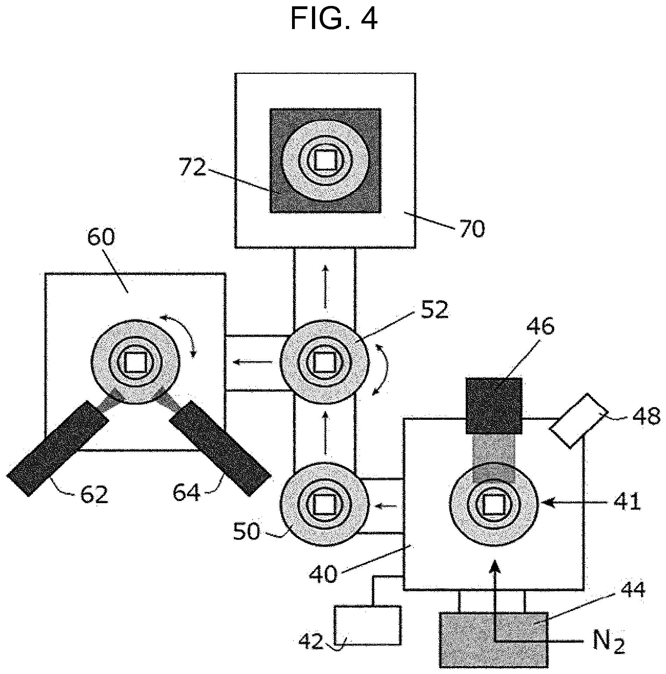

FIG. 4 is a top configuration view of an atmospheric pressure low-temperature joining apparatus. Here, joining with a vapor-assisted vacuum ultraviolet irradiation technique and a surface activation normal temperature joining process can be performed. In FIG. 4, the reference sign 41 denotes a sample inlet port, the reference signs 50 and 52 denote standby chambers, and the reference sign 72 denotes a sample stage (41, 50, 52, and 72 may be simply referred to as stages). The reference sign 40 denotes an airtight chamber (air-lock chamber), the reference sign 60 denotes an X-ray photoelectron spectroscopy chamber (XPS chamber), and the reference sign 70 denotes a joining chamber (40, 60, and 70 may be simply referred to as chambers). The reference sign 46 denotes a vacuum-ultraviolet light source, the reference sign 48 denotes a temperature and humidity sensor, the reference sign 42 denotes a vacuum pump, the reference sign 44 denotes an atomizer, and the reference signs 62 and 64 denote X-ray sources and photoelectron detectors. The vacuum ultraviolet irradiation technique is performed in the airtight chamber (air-lock chamber) 40. After a sample is left at the sample inlet port 41, a solvent vapor finely atomized with the atomizer 44 is mixed with high purity nitrogen, the mixed vapor is adjusted to a predetermined humidity with the temperature and humidity sensor 48 and introduced into the chamber, and the sample is then irradiated with vacuum-ultraviolet light from the vacuum-ultraviolet light source 46. Thereafter, the sample is conveyed to the X-ray photoelectron spectroscopy chamber (XPS chamber) 60 or the joining chamber 70 via the standby chambers 50 and 52. A heater is built in the sample stage 72 in the joining chamber 70, and the sample can be heated at the time of joining with the vacuum ultraviolet irradiation technique.

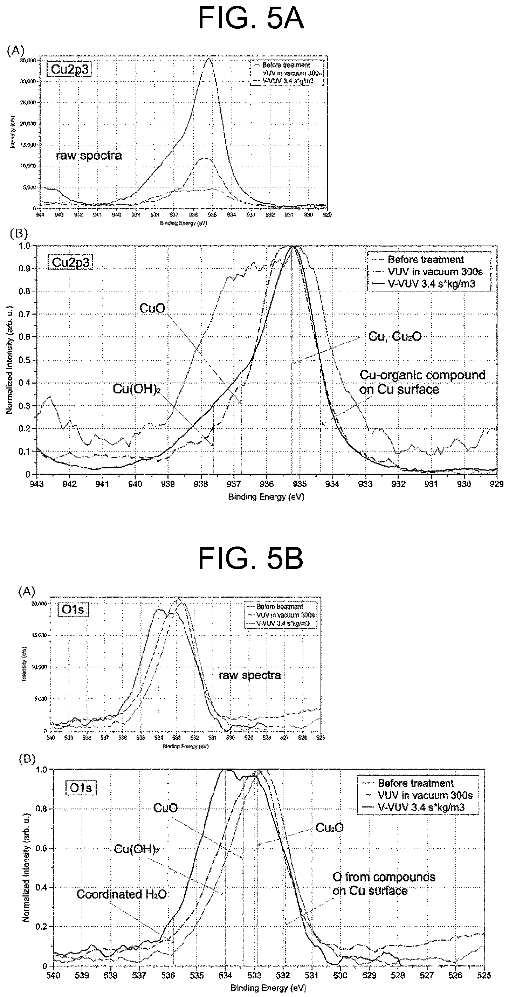

FIG. 5A(A) is an as-is spectrum of XPS Cu2p3 showing a change in a chemical bonding state of a CMP-Cu surface before and after vacuum-ultraviolet light irradiation. FIG. 5A(B) is a spectrum emphasizing the difference in the chemical bonding state of Cu by normalizing the spectrum of FIG. 5A(A) with the maximum intensity. In the spectrum obtained by only vacuum-ultraviolet light irradiation, peaks of -OH and -O derived from contaminants are attenuated, but a peak of Cu(OH)₂, which serves as a supply source of oxide nanoparticles that function as a joining and separation layer, does not sufficiently appear. Meanwhile, on the surface subjected to the vapor-assisted vacuum ultraviolet irradiation technique, a peak derived from Cu(OH)₂ appears, suggesting progress of an intended process.
FIG. 5B(A) is an as-is spectrum of XPS O1s showing a change in a chemical bonding state of a CMP-Cu surface before and after vacuum-ultraviolet light irradiation. FIG. 5B(B) is a spectrum emphasizing the difference in the chemical bonding state of O by normalizing the spectrum of FIG. 5B(A) with the maximum intensity. On the surface subjected to the vapor-assisted vacuum ultraviolet irradiation technique, a peak derived from coordinated molecular water appears, suggesting formation of Cu(OH)₂.

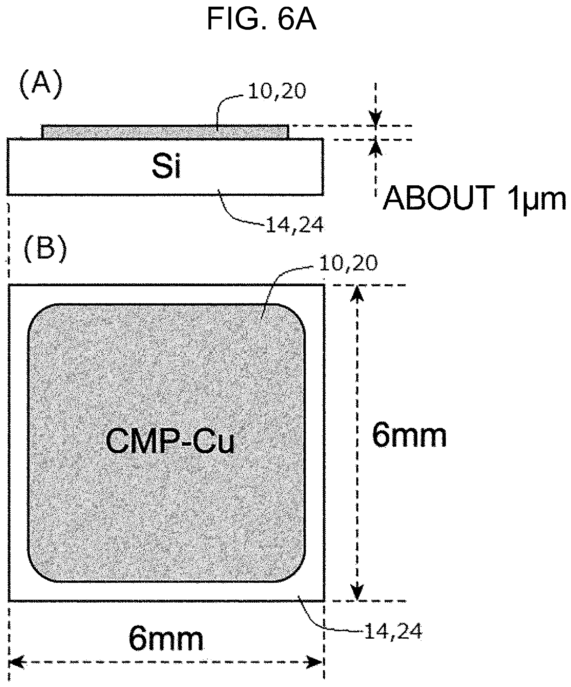

FIG. 6A shows views illustrating a sample shape. FIG. 6A(A) illustrates a sample shape viewed from the side of the sample. FIG. 6A(B) illustrates a sample shape viewed from the top of the sample.
FIG. 6B shows schematic explanatory views of a test performed on a laminate sample. FIG. 6B(A) is a view illustrating a method of a shear strength test in Examples. FIG. 6B(B) is a view illustrating a method of observing a SEM image of a Cu joint interface (observation of an interface with an electron microscope).

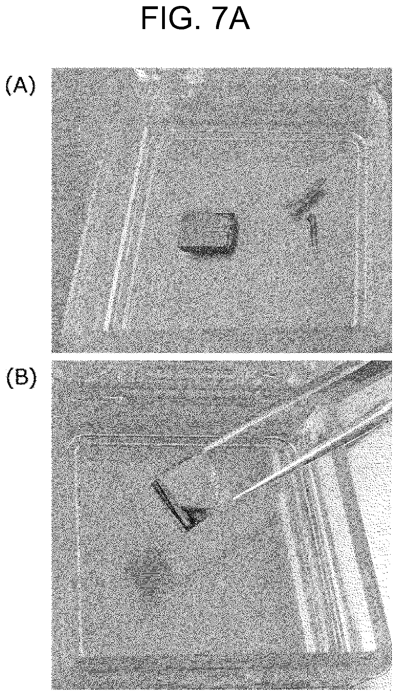

FIG. 7A shows a laminate having a cross-link formed with a vapor-assisted vacuum ultraviolet irradiation technique, and shows an example of a sample before cooling treatment. FIG. 7A(A) shows a state in which a Cu-Cu interface remains bonded and is not broken or peeled, and a base material is broken from the inside of a Si chip. FIG. 7A(B) shows a state in which a Cu-Cu interface remains bonded and is not broken or peeled, and an adhesive is peeled off that is used for fixing a sample to a shear strength test stage. That is, it is indicated that solid-phase separation cannot be performed without cooling treatment.

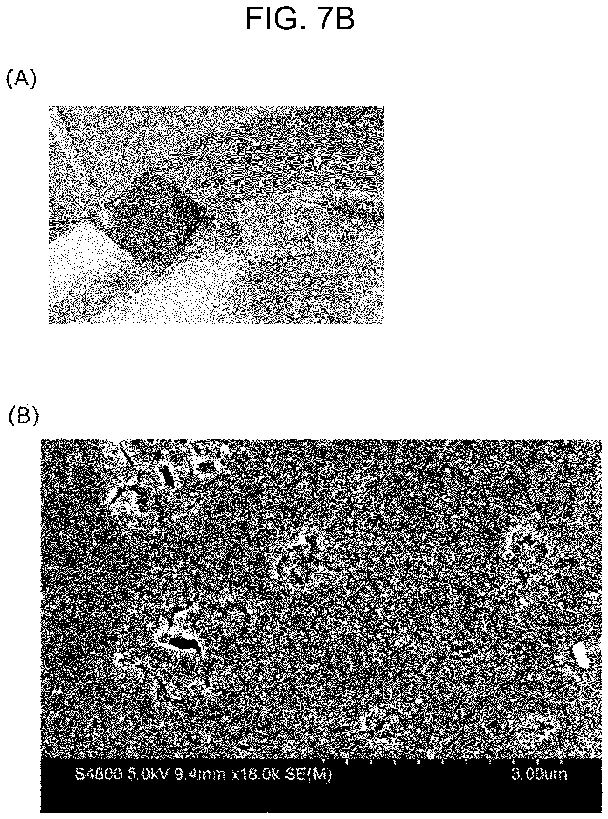

FIG. 7B shows a laminate having a cross-link formed with a vapor-assisted vacuum ultraviolet irradiation technique, and shows an example of a sample after cooling treatment. FIG. 7B(A) shows the surface of the sample after cooling treatment. FIG. 7B(B) is a SEM image of the surface of the sample after cooling treatment. FIG. 7B(A) shows an overall image in which two chips are separated in a solid phase by stress application by human power through direct grip without clear breakage of the Si chip and the Cu thin film. In the enlarged image of FIG. 7B(B), it is observed that a remarkable fracture is not caused in the Cu thin film, and the surface of the Cu thin film is roughened due to expansion of oxide nanoparticles.

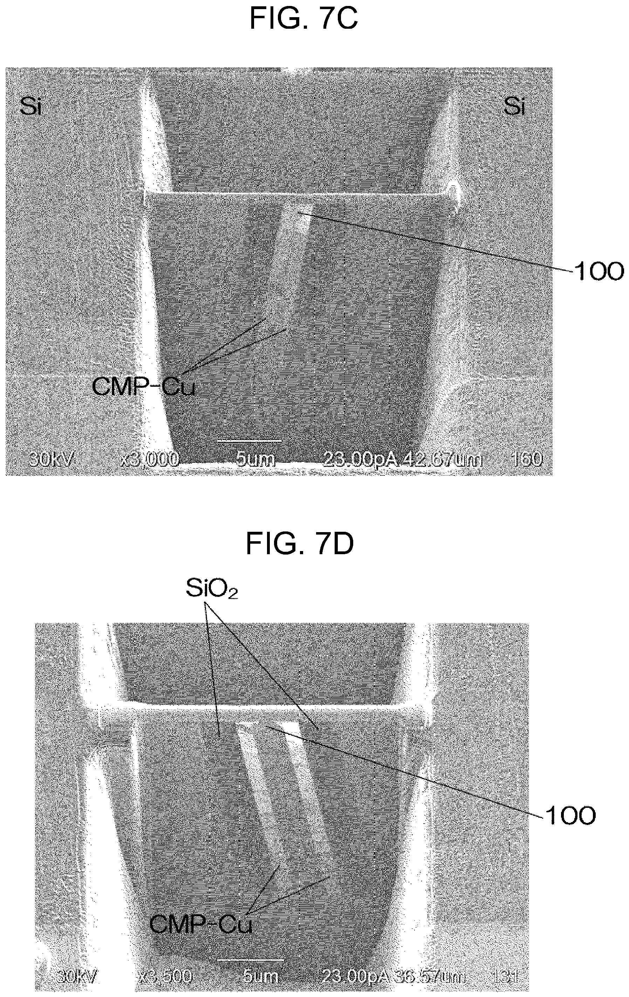

FIG. 7C is a SEM image showing a structural change of a laminate having a cross-link formed with a vapor-assisted vacuum ultraviolet irradiation technique, and shows an example of a sample before cooling treatment. It is observed that when cooling treatment is not performed, adhesion between Cu thin films is maintained.
FIG. 7D is a SEM image showing a structural change of a laminate having a cross-link formed with a vapor-assisted vacuum ultraviolet irradiation technique, and shows an example of a sample after cooling treatment. It is observed that Cu thin films are separated from each other by cooling treatment. The reason why the Cu thin films are clearly separated from each other is as follows. Preparation of a sample for transmission electron microscope includes a process of enclosing the laminate in a cold resin, and therefore an interface is made sparse by a compressive force accompanying resin curing and thus partially broken, and the resin flows into the breakage and cures.

### DESCRIPTION OF EMBODIMENTS

Hereinafter, the present invention will be described with reference to the drawings.

FIG. 1A shows conceptual views of a solid-phase separation method by cooling a copper-copper laminate, as one example of the present invention. FIG. 1A(A) is a configuration sectional view of a copper-copper laminate in which a general material having a negative thermal expansion coefficient is sandwiched as a cross-linking layer 30, FIG. 1A(B) is an explanatory view of a starting point of a defect involuntarily generated in a cross-linking layer of a material having a negative thermal expansion coefficient and in the vicinity of an interface between the cross-linking layer and a structure (hereinafter, also referred to as a base material), and FIG. 1A(C) is an explanatory view of a state in which a fracture propagates in an unpredictable direction from the starting point of the defect in FIG. 1A(B).

The copper-copper laminate to be processed includes a first copper conductor film 10, a second copper conductor film 20, a base material as a first structure 14, a base material as a second structure 24, and the cross-linking layer 30. In the case of an electronic device, the structure (base material) is typically a silicon substrate, a printed wiring board, a Si wafer, or the like, and a wiring pattern (copper thin film wiring pattern) is provided on the base material using a copper foil as a copper conductor film. Therefore, the first copper conductor film 10 is layered on a surface of the first structure (base material) 14 to form a joining surface, and the second copper conductor film 20 is layered on a surface of the second structure (base material) 24 to form a joining surface (see FIG. 1A(A)).

Compared with the cross-linking layer 30, the first copper conductor film 10 and the first structure 14, and the second copper conductor film 20 and the second structure 24 have a larger thickness than the cross-linking layer 30, and therefore in these drawings, the first copper conductor film 10 and the first structure 14 are integrally illustrated as the first copper conductor film 10, and the second copper conductor film 20 and the second structure 24 are integrally illustrated as the second copper conductor film 20.

When a temperature change is applied to the copper-copper laminate to be processed, a stress determined from the temperature change and the thermal expansion coefficient in the vicinity of the magnetic transition temperature of copper(II) oxide acts on the first copper conductor film 10 and the second copper conductor film 20 sandwiching the cross-linking layer 30. When the stress acts, a peeling fracture 91 occurs inside the cross-linking layer 30, and a partial fracture 90 of a copper conductor film occurs only in the vicinity of the interface with the cross-linking layer 30 (see FIG. 1A(B)). Thereafter, the stress further acts to cause defect propagation 92 in a cross-linking layer, which is a phenomenon in which a defect propagates in the cross-linking layer 30 (see FIG. 1A(C)).

In the present invention, since the temperature change in the vicinity of the magnetic transition temperature finally causes a solid-phase fracture, the magnetic transition temperature is also referred to as trigger temperature. The magnetic transition temperature of copper(II) oxide in the present invention varies as compared with the case of a pure single crystal of copper(II) oxide, and thus is -100°C or more and -80°C or less.

FIG. 1B shows conceptual views of a solid-phase separation method by cooling a copper-copper laminate with a vapor-assisted vacuum ultraviolet irradiation technique, as an example of the present invention. FIG. 1B(A) is a configuration sectional view of a copper-copper laminate sandwiched between cross-linking layers, FIG. 1B(B) is an electron micrograph of a nanocrystal of copper(II) oxide (in the present description, sometimes described as "CuO nanocrystal") by a transmission electron microscope (hereinafter, sometimes referred to as TEM), and FIG. 1B(C) is an explanatory view of a structure in a cross-linking layer.

A cross-linking layer 30 is present between a first copper conductor film 10 and a second copper conductor film 20 (FIG. 1B(A)), and native oxide layers 12 and 22 are present between the first copper conductor film 10 and the cross-linking layer 30 and between the second copper conductor film 20 and the cross-linking layer 30, respectively (FIG. 1B(C)). In the cross-linking layer 30 formed using the vapor-assisted vacuum ultraviolet irradiation technique, a CuO nanocrystal can be generated in the vicinity of an interface with time by the reaction represented by the following Formula (1) (see FIG. 1B(B)).

Cu(OH)₂ → CuO + H₂O (1)

The CuO nanocrystal is a crystal having a crystal grain size of 1 to 20 nm, and for example, as illustrated in FIG. 1B(B), the crystal grain size is measured with a method using an electron microscope such as a transmission electron microscope. Preferably, a crystal grain size of the CuO nanocrystal may be 1 nm or more and 10 nm or less.

FIG. 1C shows explanatory configuration views of a solid-phase separation state of a copper-copper laminate. FIG. 1C(A) is a configuration sectional view of a copper-copper laminate joined via a cross-linking layer 30, and FIG. 1C(B) is an explanatory view of solid-phase separation in the cross-linking layer 30 of the copper-copper laminate.

The cross-linking layer 30 is located between a first copper conductor film 10 and a second copper conductor film 20. The cross-linking layer 30 has a thickness of, for example, 15 to 20 nm. A CuO nanocrystal layer in the vicinity of an interface rapidly expands at a constant stress in the vicinity of the magnetic transition temperature, which is the trigger temperature (see FIG. 1C(A)). As a result of solid-phase separation in the cross-linking layer 30 of the copper-copper laminate, residual cross-linking layers 34a and 34b are located on the former joining surfaces of the first copper conductor film 10 and the second copper conductor film 20, and a crushed particulate CuO nanocrystal 34c remains (see FIG. 1C(B)).

The cross-linking layer structure is formed using a vapor-assisted vacuum ultraviolet irradiation in a water vapor-containing atmospheric pressure nitrogen atmosphere (hereinafter, referred to as vapor-assisted vacuum ultraviolet irradiation technique).

FIG. 2 shows explanatory views of steps of a vapor-assisted vacuum ultraviolet joining process. FIG. 2(A) illustrates a step of irradiating a copper conductor film surface with vacuum-ultraviolet light to purify the copper conductor film surface, FIG. 2(B) illustrates a state after purifying the copper conductor film surface, FIG. 2(C) illustrates a step of bringing copper conductor films on structure surfaces close to each other to form a cross-linking layer, and FIG. 2(D) illustrates a step of joining the structure surfaces with the cross-linking layer by contact at room temperature and heating at a low temperature.

In FIG. 2(A), the copper conductor film surface is irradiated with vacuum-ultraviolet light under control of the exposure amount. On the surfaces of the copper conductor films 10 and 20, an organic contaminant 23 (adhering contaminant of an organic compound) and native oxide layers 12 and 22 are present. In FIG. 2(B), the organic contaminant 23 and a part of the native oxide layers 12 and 22 present on the surfaces of the copper conductor films 10 and 20 are removed with vacuum-ultraviolet light. In FIG. 2(C), the native oxide layers 12 and 22 on the surfaces of the copper conductor films 10 and 20 are partially reduced to form a cross-linking layer 30. In FIG. 2(D), after formation of the cross-linking layer 30, the first copper conductor film 10 and the second copper conductor film 20 are joined via the cross-linking layer 30 to form a copper-copper laminate in which a first structure and a second structure are joined.

On a metal surface modified with the vapor-assisted vacuum ultraviolet irradiation technique, a cross-linking layer 30 of a hydroxide hydrate having a thickness of several nanometers is formed. A strong bond between such surfaces can be obtained by bringing the surfaces into contact with each other at normal temperature and then heating the surfaces to, for example, about 150°C to promote a dehydration condensation reaction.

In the present invention, a film of a metal native oxide (that is, a native oxide of copper) is partially reduced during performing the vapor-assisted vacuum ultraviolet irradiation technique, and thus metal ions (copper ions) are generated. Among the metal ions, excessive metal ions not contributing to formation of the cross-linking layer react with water molecules generated by the dehydration condensation reaction, and thus an oxide nanocrystal is generated in the cross-linking layer. As a result, at joint interfaces of the laminate, the boundaries between the cross-linking layer 30 and the native oxide layer 12 and between the cross-linking layer 30 and the native oxide layer 22 disappear and become ambiguous with time, so that occurrence of fracture at an interface can be prevented at the time of applying a stress. In the present description, the above-described change in a boundary surface with time may be referred to as "diffusion of ions" focusing on the movement of generated metal ions.

In the present invention, the above-described dehydration condensation reaction and ion diffusion improve the strength of a joined body.

FIG. 3 shows an explanatory view of a step of a surface activation normal temperature joining process as a comparative example, and explains the process at an atomic level. In order to verify the effectiveness of a cross-linking layer, a surface activation normal temperature joining method that enables formation of an ideal direct joint interface is used as a comparison object.

FIG. 3(A) illustrates organic contaminants (adhering contaminants of organic compounds) 13 and 23 adsorbed on surfaces of a first copper conductor film 10 and a second copper conductor film 20 and atoms or molecules of native oxide layers 12 and 22 in an initial state.

FIG. 3(B) illustrates a cleaning process on a copper conductor film surface with vacuum-ultraviolet light.

FIG. 3(C) illustrates joining of copper conductor films in vacuum in a state of no significant heating, such as heating at a low temperature.

The surface activation normal temperature joining method is a method of ideal direct joining in which a chemically stable layer such as an oxide is removed with an Ar fast atom beam 65 (hereinafter referred to as Ar-FAB) in high vacuum (see FIG. 3(B)), for using an attractive force generated between atomically clean copper conductor films. As a result, the first copper conductor film 10 and the second copper conductor film 20 are joined without a cross-linking layer (see FIG. 3(C)).

FIG. 4 is a configuration view of an atmospheric pressure low-temperature joining apparatus. Using this apparatus, joining with a vapor-assisted vacuum ultraviolet irradiation technique and a surface activation normal temperature joining process can be performed.

In FIG. 4, the atmospheric pressure low-temperature joining apparatus includes an airtight chamber (air-lock chamber) 40, standby chambers 50 and 52, an X-ray photoelectron spectroscopy chamber (XPS chamber) 60, and a joining chamber 70.

The airtight chamber (air-lock chamber) 40 is provided with a sample inlet port 41, a vacuum pump 42, an atomizer 44, a vacuum-ultraviolet light source 46, and a temperature and humidity sensor 48. The sample inlet port 41 is an inlet port for loading of a sample to be processed into the airtight chamber (air-lock chamber) 40. The atomizer 44 supplies a nitrogen gas atmosphere containing atomized pure water vapor into the airtight chamber (air-lock chamber) 40. The vacuum pump 42 exhausts air in the airtight chamber (air-lock chamber) 40 to enable the atomizer 44 to perform replacement with a nitrogen atmosphere. As the vacuum-ultraviolet light source 46, for example, an excimer lamp can be used. The excimer lamp uses light (excimer light) generated by discharge plasma (dielectric barrier discharge) generated in a lamp filled with a rare gas. The main wavelength of the excimer lamp is 126 nm (Ar₂), 146 nm (Kr₂), 172 nm (Xe₂), 222 nm (KrCl), or 308 nm (XeCl). A lamp unit having a main wavelength of 172 nm with Xe₂ is suitably used as the vacuum-ultraviolet light for surface modification and hydrophilization treatment (wettability improvement). The temperature and humidity sensor 48 is a device for measurement of the humidity and the pressure in the airtight chamber (air-lock chamber) 40.

The standby chamber 50 and the standby chamber 52 are standby places for conveyance of the sample surface-modified in the airtight chamber (air-lock chamber) 40 to the X-ray photoelectron spectroscopy chamber (XPS chamber) 60 and the joining chamber 70.

The X-ray photoelectron spectroscopy chamber (XPS chamber) 60 is a chamber for photographing of an X-ray photoelectron spectroscopy image of a sample surface, and is provided with X-ray sources 62 and 64. The X-ray sources 62 and 64 can deflect a beam to three axes in XYZ directions, and can irradiate any position in the sample with an ion beam. The XPS (X-ray photoelectron spectroscopy) is a method of measuring a kinetic energy distribution of photoelectrons emitted by X-ray irradiation to obtain knowledge on the kind, the abundance, and the chemical bonding state of elements present on a sample surface (at a depth of about several nanometers).

In the joining chamber 70, copper conductor films in the sample are joined to each other. In the vapor-assisted vacuum ultraviolet irradiation technique, copper conductor films are joined to each other via a cross-linking layer. On the other hand, in the surface activation normal temperature joining process, copper conductor films are directly joined to each other using the attractive force generated between the atomically clean copper conductor films, and thus no cross-linking layer is included.

Subsequently, the mechanism of action of the method for separating a copper-copper laminate of the present invention will be described. For example, as shown in FIG. 1C, essential elements for solid-phase separation of a Cu-containing joint interface by cooling are the following two points:
(1) formation of a cross-linking layer with a simple compound derived from a copper conductor film; and
(2) Significant volume expansion of the cross-linking layer only in a temperature region in the very vicinity of the magnetic transition temperature as a clear trigger temperature.

If the magnetic transition temperature as a trigger temperature is sufficiently lower than the working temperature of a normal electronic device, there is no problem in normal use of the electronic device.

For formation of the cross-linking layer, the Cu hydroxide hydrate cross-link formed on the Cu surface modified by the vapor-assisted vacuum ultraviolet irradiation technique is used as it is. In this cross-linking layer, precipitation of CuO nanocrystals with time is observed with a transmission electron microscope (hereinafter, referred to as TEM) (see FIG. 1B(B)).

It is considered that these CuO nanocrystals are generated mainly by a reaction between water molecules generated by a dehydration condensation reaction of Cu(OH)₂·[H₂O]₂ forming the cross-linking layer and a surplus of metal ions (copper ions) generated with the vapor-assisted vacuum ultraviolet irradiation technique in which the native oxide film on the material surface is partially reduced by H radicals through irradiation with vacuum-ultraviolet light (meanwhile, it is considered that the CuO nanocrystals are also generated by the reaction of the above Formula (1) of Cu(OH)₂ → CuO + H₂O from Cu(OH)₂ resulting from separation of water from Cu(OH)₂·[H₂O]₂). Through TEM observation, it has been found that oxide nanocrystals are generated under a similar mechanism by application of the vapor-assisted vacuum ultraviolet irradiation technique to an Al surface, although a different material is used.

In the method for separating a copper-copper laminate of the present invention, the laminate is cooled to the magnetic transition temperature of copper(II) oxide (CuO) (in a range of -100°C or more and -80°C or less) or less, and thus a CuO nanocrystal contained in the cross-linking layer expands to generate a stress at an interface, and a solid phase separation effect is obtained.

The stress generated at the joint interface is considered to be proportional to the generation density of nanocrystals. Therefore, the exposure amount, which is a parameter of the vapor-assisted vacuum ultraviolet irradiation technique, is used as the simplest process control condition. Furthermore, it is estimated that the thickness of the crosslinking layer is proportional to the generation density of nanocrystals, and therefore the thickness of the cross-linking layer may be used as the process control condition.

### EXAMPLES

As an example, a result of solid-phase separation in a laminate of CMP (chemical mechanical polishing)-Cu thin films formed on a Si chip is given (see FIG. 6A). This combination is one of typical structures as flat wiring of a laminated electronic substrate. Thus, a laminate of samples having the same structure is used to eliminate an influence of a difference in thermal expansion coefficient between materials and extract only the effect of the stress due to expansion of the cross-linking layer.

In order to clarify presence or absence of the solid phase separation effect depending on presence or absence of a cross-linking layer, a sample was also produced by surface activated bonding at normal temperature (hereinafter, referred to as SAB method) by Ar fast atom beam impact in high vacuum, in addition to a laminate obtained by a vapor-assisted vacuum ultraviolet irradiation technique, and the samples produced with both the joining methods were evaluated by a shear test for a change in joining strength before and after cooling.

The CMP-Cu thin film, which was formed on a Si wafer having a native oxide film, had a thickness of about 1 µm and an average surface roughness of about 2 nm (see FIG. 6A). The sample was ultrasonically washed for 180 s with each of acetone, ethanol, and water in this order to remove the initial adsorbate, and then introduced into an atmospheric pressure low-temperature joining apparatus (FIG. 4). In the atmospheric pressure low-temperature joining apparatus shown in FIG. 4, after each surface modification process, XPS observation can be performed without exposing the sample surface to the outside air.

Steps of a process for producing the laminate, in which the sample was introduced into a vessel and the vapor-assisted vacuum ultraviolet irradiation technique was then applied to the sample with the use of the atmospheric pressure low-temperature joining apparatus, are described below.
(1) In an airtight chamber (air-lock chamber) 40, air was replaced with a nitrogen atmosphere containing atomized pure water vapor.
(2) In the airtight chamber (air-lock chamber) 40, irradiation with vacuum-ultraviolet light having a wavelength of 172 nm and an illuminance on a sample of about 5 mW/cm² was started on the Si wafer as a sample. The amount of exposure with vacuum-ultraviolet light was about 3.4 s·kg/m³. This value was adopted from a result of a previous study in which it has been found that the thickness of a cross-linking layer on a general CMP-Cu thin film reaches about 15 to 20 nm and reaches saturation.
(3) CMP-Cu surfaces on which a cross-linking layer was formed were brought into contact with each other at normal temperature, a load was applied up to 500 N, and then heating was started.
(4) The heating was performed up to 150°C and retained for 600 s to obtain a laminate.

For each condition, the wavelength of light from the vacuum-ultraviolet light source was selected, among those at which the light had a sufficient energy to decompose water vapor and various adsorbates on the material surface, so that a commercially available apparatus was capable of emit the light. The load applied at the time of contact in (3) functions to follow the inclination of the sample on one side using a swing jig because mechanical complete contact is difficult between flat surfaces at normal temperature. Therefore, the load is not necessarily to be applied. The value of the heating retention time also depends on an apparatus.

An X-ray photoelectron spectrometer (XPS) installed together with the joining apparatus was used to confirm that a hydroxide hydrate cross-link was actually formed on the CMP-Cu surface under the exposure amount condition adopted in (2) above (FIG. 5).

FIG. 5A and FIG. 5B are XPS (X-ray photoelectron spectroscopy) spectra showing a change in the chemical bonding state of the CMP-Cu surface before and after vacuum-ultraviolet light irradiation. FIG. 5A shows Cu2p3, and FIG. 5B shows O1s. FIG. 5A(A) and FIG. 5B(A) show as-is spectra measured. FIG. 5A(B) and FIG. 5B(B) show spectra obtained by normalization with the maximum peak intensity.

FIG. 5A(A) and FIG. 5A(B) show that in the spectrum obtained by only VUV irradiation, peaks of -OH and -O derived from contaminants are attenuated, but a peak of Cu(OH)₂, which serves as a supply source of oxide nanoparticles that function as a joining and separation layer, does not sufficiently appear. Meanwhile, on the surface subjected to the vacuum ultraviolet irradiation technique, a peak derived from Cu(OH)₂ appears, suggesting progress of an intended process.

FIG. 5B(A) and FIG. 5B(B) show that on the surface subjected to the vacuum ultraviolet irradiation technique, a peak derived from coordinated molecular water appears, suggesting formation of Cu(OH)₂.

That is, in Cu2p3, on the surface subjected to the vapor-assisted vacuum ultraviolet irradiation technique as compared with other surfaces, the Cu intensity clearly increased and the hydroxide hydrate proportion increased. A similar tendency was observed in O1s.

Next, a sample by a surface activation normal temperature joining method was produced in the following procedure.
(1) Under a high vacuum atmosphere with a background vacuum pressure of about 1.0 × 10⁻⁶ Pa, an Ar fast atom beam was excited at an output of 2 kV·20 mA and emitted for 300 s. Thus, the CMP-Cu surface was etched by about 15 nm (oxide was removed).
(2) In a similar high vacuum atmosphere, an atomically clean surface was immediately brought into contact at normal temperature.
(3) The sample was held for 600 s while being pressurized at normal temperature.

Both of the samples obtained by the vapor-assisted vacuum ultraviolet irradiation technique and the surface activation normal temperature joining method were unloaded quickly after joining, conveyed into an industrial freezer set at -90°C (under an air atmosphere), and held for 24 hours (cooling treatment). The laminate before and after cooling treatment was subjected to a shear test. In the shear test, as shown in FIG. 6B(A), the sample laminate was fixed on a stage 80 via an adhesive 82, a force was gradually applied to the Si wafer as a first structure 14 using a load cell having a maximum load of 500 N, and a change in the joining strength and a change in the fracture mode of the laminate were observed.

The state of the joint interface in the sample laminate was observed with a scanning electron microscope (hereinafter, referred to as SEM) as follows.
(1) The cooled sample laminate was immersed in a two-liquid mixing type liquid epoxy resin at normal temperature.
(2) The resulting product was allowed to stand until the epoxy resin solidified. It is noted that, as the resin volume decreases in the solidification process of the epoxy resin, a stress is applied to the sample laminate immersed in the liquid epoxy resin. Since the interface in the cooled sample laminate is weakened, the interface separates in this process, and the epoxy resin flows into the gap.
(3) After solidification of the epoxy resin, the sample was cut into a size that enables introduction into an electron microscope. In order to observe the joint interface in the cut sample, the sample was "dug deeply" toward the inside of the material with an electron beam (see FIG. 6B(B)).
(4) The structure in the vicinity of the interface was observed with a SEM. FIG. 7C and FIG. 7D show SEM images of a laminate, before and after cooling, having a cross-linking layer formed with the vapor-assisted vacuum ultraviolet irradiation technique.

FIG. 7A to FIG. 7D demonstrate the effectiveness of cross-link formation with the vapor-assisted vacuum ultraviolet irradiation technique on cooling solid-phase performance. FIG. 7A shows a laminate having a cross-linking layer formed with the vapor-assisted vacuum ultraviolet irradiation technique, and shows an example of a sample before cooling treatment. FIG. 7B shows a laminate having a cross-linking layer formed with the vapor-assisted vacuum ultraviolet irradiation technique, and shows an example of a sample after cooling treatment.

FIG. 7A(A) shows a state in which a Cu-Cu interface remains bonded and is not broken or peeled, and the laminate is broken from the inside of a Si chip. FIG. 7A(B) shows a state in which a Cu-Cu interface remains bonded and is not broken or peeled, and an adhesive is peeled off that is used for fixing a sample to a shear strength test stage. That is, FIG. 7A shows that in the laminate having the cross-link formed with the vapor-assisted vacuum ultraviolet irradiation technique, strong bonding was maintained before cooling. Meanwhile, FIG. 7B(A) shows that after cooling, two chips are separated in a solid phase by stress application by human power through direct grip without clear breakage of the Si chip and the Cu thin film. In addition, the enlarged image of FIG. 7B(B) shows that the Cu thin film is not significantly broken. Furthermore, the enlarged image of FIG. 7B(B) suggests that the Cu surface was covered with a film expanded into a fine particulate state, and thus embrittled.

FIG. 7C is a SEM image showing a structural change of a laminate having a cross-linking layer formed with the vapor-assisted vacuum ultraviolet irradiation technique, and shows an example of a sample before cooling treatment. FIG. 7D is a SEM image showing a structural change of a laminate having a cross-linking layer formed with the vapor-assisted vacuum ultraviolet irradiation technique, and shows an example of a sample after cooling treatment.

In FIG. 7C and FIG. 7D, bright portions are CMP-Cu. In FIG. 7C, an interface composed of a Cu native oxide and a cross-linking layer was confirmed in CMP-Cu. In FIG. 7D, it can be seen that the interfaces are greatly separated. The reason why the Cu thin films are clearly separated from each other is as follows. Preparation of a transmission electron microscope sample includes a process of enclosing the joined body in a cold resin, and therefore an interface is made sparse by a compressive force accompanying resin curing and thus partially broken, and the resin flows into the breakage and cures.

In the shear strength test shown in FIG. 6B(A), the Cu-Cu interface of the sample before cooling treatment was firmly bonded in both the laminates formed by the surface activation normal temperature joining method and the vapor-assisted vacuum ultraviolet irradiation technique, and the interface was not broken by stress application by human power through direct grip. The laminates were broken from the adhesive between the stage and the sample or from the inside of the Si chip, and adhesion of the Cu-Cu interface was maintained even after the shear test was repeated three times (see FIG. 7A and FIG. 7C). FIG. 7A(B) shows a state in which in the laminate formed with the vapor-assisted vacuum ultraviolet irradiation technique, the Cu-Cu interface is not broken or peeled off, and the laminate is peeled off from the portion joined to the stage with the adhesive.

In particular, in the laminate obtained by the surface activation normal temperature joining method, that is, the laminate in which no cross-linking layer is formed, the similar behavior was observed even after cooling, and thus it can be said that presence or absence of a Cu hydroxide hydrate cross-linking layer determines expression of solid-phase separation performance.

Meanwhile, in the laminate obtained by the vapor-assisted vacuum ultraviolet irradiation technique, the joining strength was reduced to about 0.7 MPa or less after cooling treatment, and the laminate can be peeled by human power through direct grip. The sample after cooling treatment was peeled at the Cu-Cu interface, and the solid-phase separation performance was exhibited without remarkable breakage of the CMP-Cu thin film or the Si chip (see the appearance photograph at the time of separation in FIG. 7B(A) and the SEM image in FIG. 7B(B)). In the SEM observation of the joint interface before and after cooling treatment of the sample obtained by the vapor-assisted vacuum ultraviolet irradiation technique, the interface before cooling treatment was in close contact without a significant void, whereas after cooling treatment, an adsorbate and a cold resin entered the embrittled interface, and the gap in CMP-Cu was remarkably expanded (see FIG. 7C and FIG. 7D). A solid-phase separation effect by similar cooling treatment was also confirmed at a joint interface of Cu and polyimide with a vapor-assisted vacuum ultraviolet irradiation technique.

Although the embodiments shown in FIG. 1 to FIG. 7 are described as examples of the present invention, the present invention is not limited thereto, and various embodiments can be considered within the scope of the appended claims.

### INDUSTRIAL APPLICABILITY

The method for separating a copper-copper laminate of the present invention is suitably used for recycling structures including an electronic device. In structures including an electronic device, many flexible organic substrates are used for the purpose of reducing the thickness and the weight and achieving biocompatibility, and improvement in recovery efficiency of rare materials contained in the flexible organic substrates and the like is awaited. Therefore, if a method is provided that enables maintenance of a large bonding strength from material compounding (joining) to actual operation and enables solid-phase separation of a different material from an adhesion interface or a joint interface after service life, using such a method directly leads to reduction of a load in a recycle intermediate process.

In the method for separating a copper-copper laminate of the present invention, the growth behavior of the thickness of a cross-linking layer can be controlled with a simple parameter (exposure amount). Therefore, the method enables comprehensive life cycle design of a composite material at the time of j oining, and thus contributes to improvement in efficiency of product manufacturing process design. Use of the method across fields is expected, for example, in the next-generation automobile industry in which the cost of IoT (Internet of things) devices is predicted to exceed 40% of the total cost.

### REFERENCE SIGNS LIST

- 10: First copper conductor film
- 12: Native oxide layer of copper conductor film
- 13: Organic contaminant
- 14: First structure (base material)
- 20: Second copper conductor film
- 22: Native oxide layer of copper conductor film
- 23: Organic contaminant
- 24: Second structure (base material)
- 30: Cross-linking layer
- 34a,: 34bResidual cross-linking layer
- 34c: Particulate CuO nanocrystal
- 40: Airtight chamber (air-lock chamber)
- 41: Sample inlet port
- 42: Vacuum pump
- 44: Atomizer
- 46: Vacuum-ultraviolet light source
- 48: Temperature and humidity sensor
- 50, 52: Standby chambers
- 60: X-ray photoelectron spectroscopy chamber (XPS chamber)
- 62, 64: X-ray sources and photoelectron detectors
- 65: Ar fast atom beam
- 70: Joining chamber
- 80: Stage
- 82: Adhesive
- 90: Partial fracture of copper conductor film
- 91: Peeling fracture
- 92: Defect propagation in cross-linking layer
- 100: Cu interface

## Claims

1. A method for separating a copper-copper laminate,
the copper-copper laminate including:
a first structure having a first copper conductor film on a joining surface;
a second structure having a second copper conductor film on a joining surface; and
a cross-linking layer between the joining surface of the first structure and the joining surface of the second structure, the cross-linking layer including a nanocrystal of copper(II) oxide,
the nanocrystal having a crystal grain size of 1 to 20 nm measured with a method using an electron microscope,
the method comprising cooling the cross-linking layer to a temperature equal to or less than a magnetic transition temperature of copper(II) oxide; and separating the joining surface of the first structure and the joining surface of the second structure, wherein the magnetic transition temperature of copper(II) oxide is -100°C or more and -80°C or less.

2. The method for separating a copper-copper laminate according to claim 1, wherein the cross-linking layer has a thickness of 1 nm or more and 20 nm or less.

3. The method for separating a copper-copper laminate according to claim 1 or 2, wherein the temperature for cooling the cross-linking layer is lower than a temperature reducing a thermal expansion coefficient of at least the copper(II) oxide until reaching a negative value.

4. The method for separating a copper-copper laminate according to any one of claims 1 to 3, wherein the nanocrystal of the copper(II) oxide included in the cross-linking layer is derived from a cross-linked substance generated with a vapor-assisted vacuum ultraviolet irradiation technique.

5. The method for separating a copper-copper laminate according to any one of claims 1 to 4, wherein the cross-linking layer is generated through:
an irradiation step of irradiating the first copper conductor film and the second copper conductor film in a state of being separated from each other with vacuum ultraviolet light having a wavelength of 150 nm or more and 200 nm or less in presence of water vapor under a nitrogen gas atmosphere containing no oxygen;
an exposure step of exposing at least one of the first copper conductor film or the second copper conductor film to a cross-linked substance; and
a contact step of bringing the first copper conductor film and the second copper conductor film into contact with each other.

6. The method for separating a copper-copper laminate according to claim 5, wherein the cross-linked substance is Cu(OH)₂·[H₂O]₂.

## Patentansprüche

1. Verfahren zum Trennen eines Kupfer-Kupfer-Laminats,
wobei das Kupfer-Kupfer-Laminat enthält:
eine erste Struktur mit einer ersten Kupferleiterfolie auf einer Verbindungsfläche;
eine zweite Struktur mit einer zweiten Kupferleiterfolie auf einer Verbindungsfläche; und
eine Vernetzungsschicht zwischen der Verbindungsfläche der ersten Struktur und der Verbindungsfläche der zweiten Struktur, wobei die Vernetzungsschicht einen Nanokristall aus Kupfer(II)-oxid enthält,
wobei der Nanokristall eine Kristallkorngröße von 1 bis 20 nm aufweist, gemessen mit einem Verfahren unter Verwendung eines Elektronenmikroskops,
wobei das Verfahren umfasst: Abkühlen der Vernetzungsschicht auf eine Temperatur, die gleich oder kleiner als eine magnetische Übergangstemperatur von Kupfer(II)-oxid ist; und Trennen der Verbindungsfläche der ersten Struktur und der Verbindungsfläche der zweiten Struktur, wobei die magnetische Übergangstemperatur von Kupfer(II)-oxid -100 °C oder mehr und -80 °C oder weniger beträgt.

2. Verfahren zum Trennen eines Kupfer-Kupfer-Laminats nach Anspruch 1, wobei die Vernetzungsschicht eine Dicke von 1 nm oder mehr und 20 nm oder weniger aufweist.

3. Verfahren zum Trennen eines Kupfer-Kupfer-Laminats nach Anspruch 1 oder 2, wobei die Temperatur zum Abkühlen der Vernetzungsschicht niedriger ist als eine Temperatur, bei der der Wärmeausdehnungskoeffizient mindestens des Kupfer(II)-oxids auf einen negativen Wert sinkt.

4. Verfahren zum Trennen eines Kupfer-Kupfer-Laminats nach Anspruch 1 bis 3, wobei der in der Vernetzungsschicht enthaltene Nanokristall aus Kupfer(II)-oxid von einer vernetzten Substanz stammt, die mittels einer dampfunterstützten Vakuum-Ultraviolett-Bestrahlungstechnik erzeugt wurde.

5. Verfahren zum Trennen eines Kupfer-Kupfer-Laminats nach Anspruch 1 bis 4, wobei die Vernetzungsschicht erzeugt wird durch:
einen Bestrahlungsschritt, bei dem die erste Kupferleiterfolie und der die zweite Kupferleiterfolie in voneinander getrenntem Zustand mit Vakuum-Ultraviolettlicht mit einer Wellenlänge von 150 nm oder mehr und 200 nm oder weniger in Gegenwart von Wasserdampf, der in einer sauerstofffreien Stickstoffgasatmosphäre enthalten ist, bestrahlt werden;
einen Belichtungsschritt, bei dem mindestens eine der ersten Kupferleiterfolie oder der zweiten Kupferleiterfolie einer vernetzten Substanz ausgesetzt wird; und
einen Kontaktschritt, bei dem die erste Kupferleiterfolie und die zweite Kupferleiterfolie miteinander in Kontakt gebracht werden.

6. Verfahren zum Trennen eines Kupfer-Kupfer-Laminats nach Anspruch 5, wobei die vernetzte Substanz Cu(OH)₂·[H₂O]₂ ist.

## Revendications

1. Procédé de séparation d'un stratifié cuivre-cuivre,
le stratifié cuivre-cuivre comprenant :
une première structure présentant un premier film conducteur en cuivre sur une surface d'assemblage,
une deuxième structure présentant un deuxième film conducteur en cuivre sur une surface d'assemblage, et
une couche de réticulation située entre la surface d'assemblage de la première structure et la surface d'assemblage de la deuxième structure, la couche de réticulation comprenant un nanocristal d'oxyde de cuivre (II) ;
le nanocristal présentant une taille de grain cristallin de 1 à 20 nm, mesurée au moyen d'un microscope électronique,
le procédé comprenant le refroidissement de la couche de réticulation à une température inférieure ou égale à la température de transition magnétique de l'oxyde de cuivre (II) ; et la séparation de la surface d'assemblage de la première structure et de la surface d'assemblage de la deuxième structure, la température de transition magnétique de l'oxyde de cuivre (II) étant supérieure ou égale à -100 °C et inférieure ou égale à -80 °C.

2. Procédé de séparation d'un stratifié cuivre-cuivre selon la revendication 1, dans lequel la couche de réticulation présente une épaisseur supérieure ou égale à 1 nm et inférieure ou égale à 20 nm.

3. Procédé de séparation d'un stratifié cuivre-cuivre selon la revendication 1 ou 2, dans lequel la température de refroidissement de la couche de réticulation est inférieure à une température réduisant le coefficient de dilatation thermique d'au moins l'oxyde de cuivre (II) jusqu'à ce qu'il atteigne une valeur négative.

4. Procédé de séparation d'un stratifié cuivre-cuivre selon l'une quelconque des revendications 1 à 3, dans lequel le nanocristal d'oxyde de cuivre (II) compris dans la couche de réticulation est dérivé d'une substance réticulée générée au moyen d'une technique d'irradiation aux ultraviolets sous vide assistée par vapeur.

5. Procédé de séparation d'un stratifié cuivre-cuivre selon l'une quelconque des revendications 1 à 4, dans lequel la couche de réticulation est générée par :
une étape d'irradiation consistant à irradier le premier film conducteur en cuivre et le deuxième film conducteur en cuivre, alors qu'ils sont séparés l'un de l'autre, avec une lumière ultraviolette sous vide présentant une longueur d'onde supérieure ou égale à 150 nm et inférieure ou égale à 200 nm, en présence de vapeur d'eau sous une atmosphère d'azote dépourvue d'oxygène,
une étape d'exposition consistant à exposer au moins le premier film conducteur en cuivre ou le deuxième film conducteur en cuivre à une substance réticulée, et
une étape de mise en contact consistant à mettre en contact le premier film conducteur en cuivre et le deuxième film conducteur en cuivre.

6. Procédé de séparation d'un stratifié cuivre-cuivre selon la revendication 5, dans lequel la substance réticulée est le Cu(OH)₂·[H₂O]₂.
